# EUROPEAN PATENT SPECIFICATION

(11) **EP 4 402 377 B1**
(45) Date of publication and mention of the grant of the patent: **29.07.2026**
(21) Application number: 22868468.4
(22) Date of filing: 16.09.2022
(51) Int. Cl.: B01F 25/312, B01F 23/232, B01F 35/32, F04D 25/02, F04D 25/16, F04F 5/24, F04F 5/54, F04F 5/50, C02F 3/12

(54) **A METHOD OF AERATING A POND USING A MIXER**
VERFAHREN ZUR BELÜFTUNG EINES TEICHES MITTELS EINES MISCHERS
PROCÉDÉ D'AÉRATION D'UN ÉTANG À L'AIDE D'UN MÉLANGEUR

(30) Priority: 17.09.2021 AU 2021903003
(43) Date of publication of application: 24.07.2024
(73) Proprietor: Kang, Samuel, Sydney, New South Wales 2000 (AU)
(72) Inventor: Kang, Samuel, Sydney, New South Wales 2000 (AU)
(74) Representative: Vesterinen, Jussi Tapio
(86) International application number: PCT/AU2022/051115
(87) International publication number: WO 2023/039634

(56) References cited:
- WO-A1-00/74831
- CN-A- 113 069 949
- DE-B- 1 081 610
- US-A- 4 514 343
- US-A- 5 647 221
- US-A- 6 029 911
- US-A1- 2003 015 596
- US-A1- 2005 173 107
- US-A1- 2010 212 764
- US-A1- 2015 285 192
- US-A1- 2016 265 779
- US-A1- 2018 058 388
- US-A1- 2021 199 299

## Description

### Field of the Invention

This invention relates generally to Venturi mixers and, more particularly, this invention relates to a Venturi mixer employing turbine assistance to increase suction of one of the fluid channels thereof.

### Background of the Invention

The Venturi effect is the reduction in fluid pressure that results when a fluid flows through a constricted section (or choke) of a pipe.

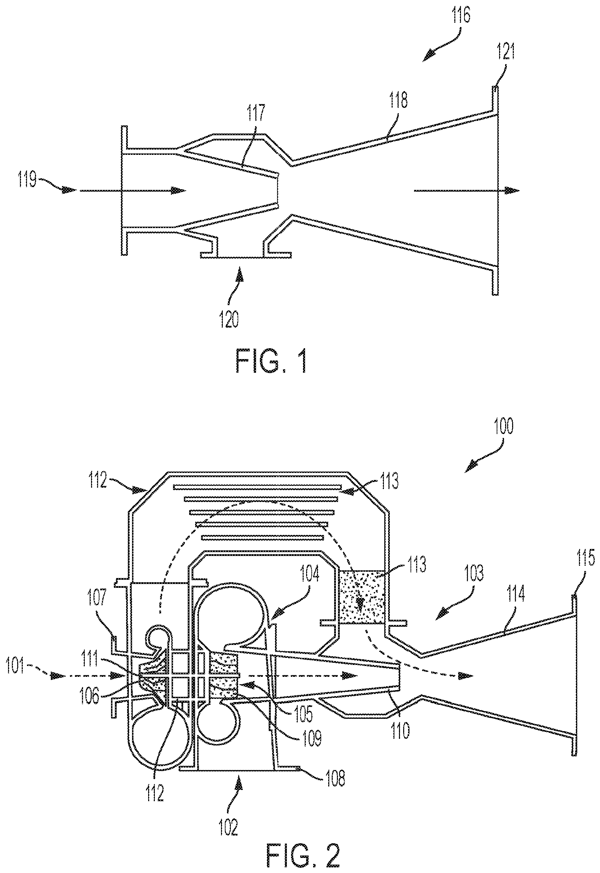

Figure 1 shows a mixer 116 employing a Venturi to mix fluids, such as to mix a liquid with a gas. Specifically, the mixer 116 comprises a constricting nozzle 117 leading to a dilating chamber 118. If a pump forces fluid through an inlet 119 of the mixer 116, the constricting nozzle increases the velocity of the fluid whereas the dilating chamber 118 decreases the velocity of the fluid, thereby sucking fluid in via a second inlet 120 of the mixer 116. A mixture of the fluids will flow from an outlet 121 of the mixer 116.

However, Venturi mixers of the type of Figure 1 fails to work if pressure differential exceeds suction at the second inlet 120. For example, in relatively highpressure environments such as wherein the mixer 116 is submerged in water, the suction at the second inlet 120 may be insufficient to draw in air at atmospheric pressure. Water level fluctuations may cause this problem intermittently.

This problem may be ameliorated somewhat by increasing the velocity of fluid via the first inlet 119 or alternatively having a secondary pump subsystem to pressurise fluid at the second inlet 120.

US2010/212764A1 discloses a mixing system, specifically for water and fertilizer, featuring a turbine wheel rotated by fluid flow that powers a plunger-type compressor system. This system uses a gear arrangement to pressurise a second fluid before it enters a mixing chamber, allowing for adjustable mixing ratios based on the dimensions of the plungers and nozzles. US5,647,221A describes an apparatus where a turbine drives a compressor via a common rotating shaft. The compressor is designed to take suction through a dedicated duct to facilitate the mixing of fluids at a specific mixing point. US4,514,343A discloses a method of aerating a pond according to the preamble of claim 1. It provides further technological background regarding systems designed for fluid mixing and aeration.

The present invention seeks to provide a way, which will overcome or substantially ameliorate at least some of the deficiencies of the prior art, or to at least provide an alternative.

### Summary of the Disclosure

There is provided herein a method of aerating a pond using a mixer comprising a first and second fluid channels leading to a Venturi for mixing as recited in claim 1.

The mixer comprises a compressor powered by a turbine turned by fluid flow through the second channel and acting between the channels to pump fluid through the first channel.

The compressor may comprise a compressor wheel which compresses fluid axially to radially with respect to the compressor wheel. Alternatively, the compressor may comprise a piston-type compressor. Generally, a compressor wheel would be used for lower density fluid such as gases whereas a piston-type compressor would be used for higher density fluids such as liquids.

The turbine may comprise a turbine wheel which is turned by fluid flow going radially to axially with respect to the turbine wheel.

Gearing may act between the turbine wheel and the compressor wheel to control the speed of the compressor wheel, such as wherein the speed of the speed of the compressor wheel is increased where the second channel is used for high density fluids such as liquids and the first channel is used for lower density fluids such as an air.

The present mixer may comprise a compact configuration wherein the compressor wheel, turbine wheel and/or compressor nozzle are coaxial.

A bypass may take the first channel around the turbine wheel and may comprise a heat exchanger to introduce heat to favour fluid vaporisation or alternatively to dissipate compressively generated heat. The heat exchanger may be configured to introduce heat according to a flash point of a type of fluid flowing therethrough.

The bypass may comprise a backflow check valve.

In embodiments, the mixer may comprise a third fluid channel and respective compressor for a further fluid such as wherein, for example, the mixer is used to mix diesel and gasoline fuel with air. According to this arrangement, each of the first and third fluid channels may have a respective bypass which may be kept separate until reaching the Venturi. Furthermore, each bypass may have a respective heat exchanger interface configured differently according to the thermal properties of the fluid flowing through the respective bypass.

The mixer is used submerged with respect to a water pump for pond aeration wherein the compressor creates sufficient suction to overcome water pressure to draw in atmospheric air via and air hose. In accordance with this embodiment, the present mixer is powered solely by water pressure from the water pump connected to the mixer via a water hose and, for example, a 300 - 750 watt water pump powered by a solar power source may be able to aerate a relatively small dam during daylight hours.

Other aspects of the invention are also disclosed.

### Brief Description of the Drawings

Notwithstanding any other forms which may fall within the scope of the present invention, preferred embodiments of the disclosure will now be described, by way of example only, with reference to the accompanying drawings in which:
Figure 1 shows a typical Venturi mixer; and
Figure 2 shows a turbine assisted Venturi mixer in accordance with an embodiment.

### Description of Embodiments

A turbine assisted Venturi mixer 100 comprises a first fluid channel 101 and a second fluid channel 102 leading to a Venturi 103 for mixing fluids separately introduced via each channel 101, 102.

The Venturi 103 comprises a constricting nozzle and a dilating chamber 114 leading to an outlet 115 of the mixer 100.

The mixer 100 is used for mixing fluid separately introduced via each channel 101, 102 and wherein a mixture of the fluids exits the outlet 115.

Whereas the fluids may both be liquid or gaseous, in a preferred embodiment, the mixer 100 is used for mixing a liquid (such as water) with a gas (such as air).

The compressor wheel 106 and the turbine wheel 109 may rotate coaxially and may have a common driveshaft 111 therebetween.

The mixer 101 may comprise gearing between the turbine wheel 109 and the compressor wheel 106. The gearing 112 may turn the compressor wheel 106 faster than the turbine wheel 109. The gearing 112 may have a gearing ratio in excess of 100.

**In** this regard, fluid for the second channel 102 may have greater density than fluid for the first channel 101. For example, the fluid for the second channel 102 may be liquid (such as water) whereas the fluid for the first channel 101 may be gaseous (such as air).

Alternatively, the gearing 112 may turn the compressor wheel 116 slower than the turbine wheel 109, such as wherein the fluid of the second channel 102 has lower density than fluid of the first channel 101.

As such, the gearing 112 may be configured depending on the phase and/or density of the fluid each inlet 101, 102. **In** embodiments, the mixer 100 may comprise a configurable gearbox (not shown) between the turbine wheel 109 and the compressor wheel 106. The gearbox may have discrete ratio settings for different types of fluid combinations which may be set during use depending on the application.

For example, the gearbox may comprise a water-to-water ratio setting wherein the both the first fluid channel 101 and the second fluid channel draw water 102, a gasoline-to-gasoline ratio setting for lower density gasoline liquid wherein the both the first fluid channel 101 and the second fluid channel draw gasoline 102, a water-to-air ratio setting wherein the first fluid channel 101 draws water and the second fluid channel 102 draws air and an air-to-water ratio setting wherein the first fluid channel 101 draws air and the second 102 inlet draws water. As can be appreciated, the gear ratio would be higher (i.e., the compressor wheel 106 would turn relatively faster than the turbine wheel 109) at the air-to-water ratio setting as compared to the water-to-air ratio setting.

The first channel 101 may comprise a bypass which may go from the compressor wheel 106 around the turbine wheel 109 to the Venturi 103.

The bypass may comprise a heat exchanger interface 113. The heat exchanger interface 113 may expose greater surface contact area for passive conductive heat exchange with surrounds of the mixer 100 including where the mixer 101 is submerged in water.

The mixer 100 may further comprise a backflow check valve operative to regulate or prevent reverse fluid flow via the bypass. The valve may comprise a flap or valve which is biased to a closed position, but which opens under pressure of fluid flow via the first channel 101. A pressure release valve (not shown) may bypass the check valve in case of excessive pressure buildup.

The mixer 100 may be used for pond aeration wherein the mixer 100 is submerged, the second channel 102 connected via a water hose to a water pump and the first channel 101 is connected to atmosphere via an air hose.

**In** embodiments, the mixer 100 may comprise more than one channel for more than one type of liquid. For example, the mixer 100 may mix a combination of fuels having differing densities and/or viscosities, such as wherein the mixer 100 uses the first fluid channel 101 for diesel fuel and has a third fluid channel (not shown) for gasoline fuel and wherein the diesel fuel and gasoline fuel are mixed with air entry via the second fluid channel 102.

**In** accordance with this embodiment, each of the first channel 101 and the third channel may comprise a respective compressor 104. Furthermore, the mixer 100 may comprise a separate bypass 112 for each of the first channel 101 and the third channel to keep the respective fluids separate until entering the Venturi 103. Furthermore, each separate bypass 112 may have a different configuration of heat exchanger interface 113 to dissipate heat differently according to the type of fluid flowing through the respective bypass 112. For example, each heat exchanger 113 may be configured to absorb heat differently to encourage vaporisation within the venturi depending on the type of fuel. The heat exchanger 113 may be configured to absorb heat according to the flash point of the type of fluid flow therethrough.

In further embodiments, the, driveshaft 111 may extend into the dilating chamber 114 and may comprise an impeller at a distal end thereof to encourage further mixing of fluids within the dilating chamber 114.

The foregoing description, for purposes of explanation, used specific nomenclature to provide a thorough understanding of the invention. However, it will be apparent to one skilled in the art that specific details are not required in order to practise the invention. Thus, the foregoing descriptions of specific embodiments of the invention are presented for purposes of illustration and description.

## Claims

1. A method of aerating a pond using a mixer (100) comprising a first and second fluid channels (101, 102) leading to a Venturi (103) for mixing fluids separately introduced via the channels (101, 102), **characterised in that** the mixer (100) comprises a compressor (104) powered by a turbine (105) turned by fluid flow through the second channel (102) and acting between the channels (101, 102) to pump fluid through the first channel (101),
the method comprising submerging the mixer (100) and connecting a water hose between a water pump and the second channel (102) and an air hose between the first channel (101) and the atmosphere.

2. The method as claimed in claim 1, wherein the compressor (104) comprises a compressor wheel (106).

3. The method as claimed in claim 2, wherein the compressor wheel (106) is axially orientated with respect to fluid flow via an inlet (107) of in the first channel (101), wherein fluid flows from axially to radially with respect to the compressor wheel (106) in the first channel (101).

4. The method as claimed in claim 1, wherein the turbine (105) comprises a turbine wheel (109) radially orientated with respect to fluid flow via an inlet (108) of the second channel (102), wherein fluid flows from radially to axially with respect to the turbine wheel (109) in the second channel (102), wherein the mixer (100) comprises the Venturi (103), and the second channel (102) comprises a nozzle (110) of the Venturi (103), the nozzle (110) constricting away from the turbine wheel (109), wherein the nozzle (110) and the turbine wheel (109) are coaxial.

5. The method as claimed in claim 1, wherein the compressor (104) comprises a compressor wheel (106) in the first channel (101) and the turbine (105) comprises a turbine wheel (109) and wherein the compressor wheel (106) and turbine wheel (109) are fluidly separated with respect to inlets (107, 108) of the channels (101, 102).

6. The method as claimed in claim 1, wherein the compressor (104) comprises a compressor wheel (106) in the first channel (101) and the turbine (105) comprises a turbine wheel (109) and wherein the compressor wheel (106) and turbine wheel (109) rotate coaxially.

7. The method as claimed in claim 1, wherein the compressor (104) comprises a compressor wheel (106) in the first channel (101) and the turbine (105) comprises a turbine wheel (109) and wherein the mixer (100) further comprises gearing (112) between the turbine wheel (109) and the compressor wheel (106), wherein the gearing (112) turns the compressor wheel (106) faster than the turbine wheel (109), wherein fluid in the second channel (102) has greater density than fluid in the first channel (101) and wherein fluid in the second channel (102) is a liquid and fluid in the first channel (101) is a gas.

8. The method as claimed in claim 1, wherein the compressor (104) comprises a compressor wheel (106) in the first channel (101) and the turbine (105) comprises a turbine wheel (109) and wherein the first channel (101) comprises a bypass from the compressor wheel (106) around the turbine wheel (109) to the Venturi (103), wherein the bypass comprises a heat exchanger interface (113) and further comprising a backflow check valve operative to prevent reverse fluid flow via the bypass.

9. The method as claimed in claim 8, wherein the mixer (100) further comprises a third fluid channel having a respective further compressor (104) for further pumping fluid through the third fluid channel, wherein the mixer (100) further comprises a further bypass from the further compressor (104), wherein the bypass and the further bypass are separate until reaching the Venturi (103), wherein the bypass and the further bypass have respective heat exchanger interfaces (113), wherein the respective heat exchanger interfaces (113) are configured to exchange heat at differing rates, wherein the respective heat exchanger interfaces are configured to exchange heat differently according to a type of fluid flowing through a respective bypass.

10. The method as claimed in claim 1, wherein a driveshaft (111) turned by the turbine (105) extends into a dilating chamber (114) and comprises an impeller at a distal end thereof to further assist mixing of fluids within the dilating chamber (114), wherein gearing (112) is configured depending on the type of fluids entering the first and second channels (101, 102), wherein the gearing (112) is configured depending on the phase of fluids entering the first and second channels (101, 102), wherein the gearing (112) is configured depending on the density of fluids entering the first and second channels (101, 102) and wherein the mixer comprises a configurable gearbox between the turbine wheel (109) and the compressor wheel (106) which has discrete ratio settings for different types of fluid combinations.

11. The method as claimed in claim 8, wherein the heat exchanger interface (113) is configured to introduce heat to favour fluid vaporisation, wherein the heat exchanger interface (113) is configured to introduce heat according to a flash point of a type of fluid flowing therethrough.

12. The method as claimed in claim 8, wherein the heat exchanger interface (113) is configured to dissipate heat compressively generated by the compressor (104).

13. The method as claimed in claim 7, the method comprising setting a gearing ratio of the gearing (112) depending on types of fluids entering the first and second channels (101, 102).

14. The method as claimed in claim 9, the method comprising introducing three different types of fluid to the first, second and third channels (101, 102) respectively and mixing the three different types of fluid using the mixer (100).

## Patentansprüche

1. Verfahren zum Belüften eines Teiches unter Verwendung eines Mischers (100), umfassend einen ersten und einen zweiten Fluidkanal (101, 102), die zu einem Venturi (103) führen, um separat über die Kanäle (101, 102) eingeführte Fluide zu mischen, **dadurch gekennzeichnet, dass** der Mischer (100) einen Verdichter (104) umfasst, der durch eine Turbine (105) angetrieben wird, die durch eine Fluidströmung durch den zweiten Kanal (102) gedreht wird und zwischen den Kanälen (101, 102) wirkt, um Fluid durch den ersten Kanal (101) zu pumpen,
wobei das Verfahren das Eintauchen des Mischers (100) und das Anschließen eines Wasserschlauchs zwischen einer Wasserpumpe und dem zweiten Kanal (102) und eines Luftschlauchs zwischen dem ersten Kanal (101) und der Atmosphäre umfasst.

2. Verfahren nach Anspruch 1, wobei der Verdichter (104) ein Verdichterrad (106) umfasst.

3. Verfahren nach Anspruch 2, wobei das Verdichterrad (106) in Bezug auf die Fluidströmung über einen Einlass (107) in den ersten Kanal (101) axial ausgerichtet ist, wobei Fluid in Bezug auf das Verdichterrad (106) im ersten Kanal (101) von axial nach radial strömt.

4. Verfahren nach Anspruch 1, wobei die Turbine (105) ein Turbinenrad (109) umfasst, das in Bezug auf die Fluidströmung über einen Einlass (108) des zweiten Kanals (102) radial ausgerichtet ist, wobei Fluid in Bezug auf das Turbinenrad (109) im zweiten Kanal (102) von radial nach axial strömt, wobei der Mischer (100) das Venturi (103) umfasst, und der zweite Kanal (102) eine Düse (110) des Venturis (103) umfasst, wobei sich die Düse (110) vom Turbinenrad (109) weg verengt, wobei die Düse (110) und das Turbinenrad (109) koaxial sind.

5. Verfahren nach Anspruch 1, wobei der Verdichter (104) ein Verdichterrad (106) im ersten Kanal (101) umfasst und die Turbine (105) ein Turbinenrad (109) umfasst, und wobei das Verdichterrad (106) und das Turbinenrad (109) in Bezug auf Einlässe (107, 108) der Kanäle (101, 102) fluidisch getrennt sind.

6. Verfahren nach Anspruch 1, wobei der Verdichter (104) ein Verdichterrad (106) im ersten Kanal (101) umfasst und die Turbine (105) ein Turbinenrad (109) umfasst, und wobei das Verdichterrad (106) und das Turbinenrad (109) koaxial rotieren.

7. Verfahren nach Anspruch 1, wobei der Verdichter (104) ein Verdichterrad (106) im ersten Kanal (101) umfasst und die Turbine (105) ein Turbinenrad (109) umfasst, und wobei der Mischer (100) ferner ein Getriebe (112) zwischen dem Turbinenrad (109) und dem Verdichterrad (106) umfasst, wobei das Getriebe (112) das Verdichterrad (106) schneller dreht als das Turbinenrad (109), wobei Fluid im zweiten Kanal (102) eine größere Dichte aufweist als Fluid im ersten Kanal (101), und wobei das Fluid im zweiten Kanal (102) eine Flüssigkeit ist und das Fluid im ersten Kanal (101) ein Gas ist.

8. Verfahren nach Anspruch 1, wobei der Verdichter (104) ein Verdichterrad (106) im ersten Kanal (101) umfasst und die Turbine (105) ein Turbinenrad (109) umfasst, und wobei der erste Kanal (101) einen Bypass vom Verdichterrad (106) um das Turbinenrad (109) herum zum Venturi (103) umfasst, wobei der Bypass eine Wärmetauscherschnittstelle (113) umfasst, und ferner umfassend ein Rückschlagventil, das so wirkt, dass es eine Rückströmung von Fluid über den Bypass verhindert.

9. Verfahren nach Anspruch 8, wobei der Mischer (100) ferner einen dritten Fluidkanal mit einem jeweiligen weiteren Verdichter (104) zum weiteren Pumpen von Fluid durch den dritten Fluidkanal umfasst, wobei der Mischer (100) ferner einen weiteren Bypass von dem weiteren Verdichter (104) umfasst, wobei der Bypass und der weitere Bypass bis zum Erreichen des Venturis (103) getrennt sind, wobei der Bypass und der weitere Bypass jeweilige Wärmetauscherschnittstellen (113) aufweisen, wobei die jeweiligen Wärmetauscherschnittstellen (113) so konfiguriert sind, dass sie Wärme mit unterschiedlichen Raten austauschen, wobei die jeweiligen Wärmetauscherschnittstellen so konfiguriert sind, dass sie Wärme entsprechend einer Art von Fluid, das durch einen jeweiligen Bypass strömt, unterschiedlich austauschen.

10. Verfahren nach Anspruch 1, wobei sich eine von der Turbine (105) gedrehte Antriebswelle (111) in eine Erweiterungskammer (114) erstreckt und an einem distalen Ende davon ein Laufrad umfasst, um das Mischen von Fluiden innerhalb der Erweiterungskammer (114) weiter zu unterstützen, wobei das Getriebe (112) in Abhängigkeit von der Art der in den ersten und den zweiten Kanal (101, 102) eintretenden Fluide konfiguriert ist, wobei das Getriebe (112) in Abhängigkeit von der Phase der in den ersten und den zweiten Kanal (101, 102) eintretenden Fluide konfiguriert ist, wobei das Getriebe (112) in Abhängigkeit von der Dichte der in den ersten und den zweiten Kanal (101, 102) eintretenden Fluide konfiguriert ist, und wobei der Mischer ein konfigurierbares Getriebe zwischen dem Turbinenrad (109) und dem Verdichterrad (106) umfasst, das diskrete Übersetzungseinstellungen für verschiedene Arten von Fluidkombinationen aufweist.

11. Verfahren nach Anspruch 8, wobei die Wärmetauscherschnittstelle (113) so konfiguriert ist, dass sie Wärme zuführt, um eine Fluidverdampfung zu begünstigen, wobei die Wärmetauscherschnittstelle (113) so konfiguriert ist, dass sie Wärme entsprechend einem Flammpunkt einer Art von dort hindurchströmendem Fluid zuführt.

12. Verfahren nach Anspruch 8, wobei die Wärmetauscherschnittstelle (113) so konfiguriert ist, dass sie durch den Verdichter (104) kompressionsbedingt erzeugte Wärme ableitet.

13. Verfahren nach Anspruch 7, wobei das Verfahren das Einstellen eines Übersetzungsverhältnisses des Getriebes (112) in Abhängigkeit von den Arten von Fluiden umfasst, die in den ersten und den zweiten Kanal (101, 102) eintreten.

14. Verfahren nach Anspruch 9, wobei das Verfahren das Einführen von drei verschiedenen Arten von Fluid in den ersten, zweiten bzw. dritten Kanal (101, 102) und das Mischen der drei verschiedenen Arten von Fluid unter Verwendung des Mischers (100) umfasst.

## Revendications

1. Procédé d'aération d'un étang utilisant un mélangeur (100) comprenant un premier et un deuxième canal de fluide (101, 102) menant à un Venturi (103) pour mélanger des fluides introduits séparément via les canaux (101, 102), **caractérisé en ce que** le mélangeur (100) comprend un compresseur (104) entraîné par une turbine (105) mise en rotation par un écoulement de fluide à travers le deuxième canal (102) et agissant entre les canaux (101, 102) pour pomper du fluide à travers le premier canal (101),
le procédé comprenant l'immersion du mélangeur (100) et le raccordement d'un tuyau d'eau entre une pompe à eau et le deuxième canal (102) et d'un tuyau d'air entre le premier canal (101) et l'atmosphère.

2. Procédé selon la revendication 1, dans lequel le compresseur (104) comprend une roue de compresseur (106).

3. Procédé selon la revendication 2, dans lequel la roue de compresseur (106) est orientée axialement par rapport à l'écoulement de fluide via une entrée (107) dans le premier canal (101), dans lequel le fluide s'écoule d'axialement à radialement par rapport à la roue de compresseur (106) dans le premier canal (101).

4. Procédé selon la revendication 1, dans lequel la turbine (105) comprend une roue de turbine (109) orientée radialement par rapport à l'écoulement de fluide via une entrée (108) du deuxième canal (102), dans lequel le fluide s'écoule de radialement à axialement par rapport à la roue de turbine (109) dans le deuxième canal (102), dans lequel le mélangeur (100) comprend le Venturi (103), et le deuxième canal (102) comprend une buse (110) du Venturi (103), la buse (110) se rétrécissant en s'éloignant de la roue de turbine (109), dans lequel la buse (110) et la roue de turbine (109) sont coaxiales.

5. Procédé selon la revendication 1, dans lequel le compresseur (104) comprend une roue de compresseur (106) dans le premier canal (101) et la turbine (105) comprend une roue de turbine (109), et dans lequel la roue de compresseur (106) et la roue de turbine (109) sont séparées de manière fluide par rapport aux entrées (107, 108) des canaux (101, 102).

6. Procédé selon la revendication 1, dans lequel le compresseur (104) comprend une roue de compresseur (106) dans le premier canal (101) et la turbine (105) comprend une roue de turbine (109), et dans lequel la roue de compresseur (106) et la roue de turbine (109) tournent de manière coaxiale.

7. Procédé selon la revendication 1, dans lequel le compresseur (104) comprend une roue de compresseur (106) dans le premier canal (101) et la turbine (105) comprend une roue de turbine (109), et dans lequel le mélangeur (100) comprend en outre un engrenage (112) entre la roue de turbine (109) et la roue de compresseur (106), dans lequel l'engrenage (112) fait tourner la roue de compresseur (106) plus vite que la roue de turbine (109), dans lequel le fluide dans le deuxième canal (102) a une densité supérieure à celle du fluide dans le premier canal (101), et dans lequel le fluide dans le deuxième canal (102) est un liquide et le fluide dans le premier canal (101) est un gaz.

8. Procédé selon la revendication 1, dans lequel le compresseur (104) comprend une roue de compresseur (106) dans le premier canal (101) et la turbine (105) comprend une roue de turbine (109), et dans lequel le premier canal (101) comprend une dérivation allant de la roue de compresseur (106) autour de la roue de turbine (109) jusqu'au Venturi (103), dans lequel la dérivation comprenant une interface d'échangeur de chaleur (113), et comprenant en outre un clapet anti-retour de reflux fonctionnel pour empêcher un écoulement de fluide inverse via la dérivation.

9. Procédé selon la revendication 8, dans lequel le mélangeur (100) comprend en outre un troisième canal de fluide ayant un autre compresseur (104) respectif pour pomper davantage de fluide à travers le troisième canal de fluide, dans lequel le mélangeur (100) comprend en outre une autre dérivation à partir de l'autre compresseur (104), dans lequel la dérivation et l'autre dérivation sont séparées jusqu'à atteindre le Venturi (103), dans lequel la dérivation et l'autre dérivation ont des interfaces d'échangeur de chaleur (113) respectives, dans lequel les interfaces d'échangeur de chaleur (113) respectives sont configurées pour échanger de la chaleur à des taux différents, dans lequel les interfaces d'échangeur de chaleur respectives sont configurées pour échanger de la chaleur différemment selon un type de fluide s'écoulant à travers une dérivation respective.

10. Procédé selon la revendication 1, dans lequel un arbre d'entraînement (111) entraîné par la turbine (105) s'étend dans une chambre de dilatation (114) et comprend un impulseur à une extrémité distale de celui-ci pour assister davantage le mélange de fluides à l'intérieur de la chambre de dilatation (114), dans lequel l'engrenage (112) est configuré en fonction du type de fluides entrant dans les premier et deuxième canaux (101, 102), dans lequel l'engrenage (112) est configuré en fonction de la phase des fluides entrant dans les premier et deuxième canaux (101, 102), dans lequel l'engrenage (112) est configuré en fonction de la densité des fluides entrant dans les premier et deuxième canaux (101, 102), et dans lequel le mélangeur comprend une boîte de vitesses configurable entre la roue de turbine (109) et la roue de compresseur (106) qui présente des réglages de rapport discrets pour différents types de combinaisons de fluides.

11. Procédé selon la revendication 8, dans lequel l'interface d'échangeur de chaleur (113) est configurée pour introduire de la chaleur pour favoriser la vaporisation du fluide, dans lequel l'interface d'échangeur de chaleur (113) est configurée pour introduire de la chaleur selon un point d'éclair d'un type de fluide s'écoulant à travers celle-ci.

12. Procédé selon la revendication 8, dans lequel l'interface d'échangeur de chaleur (113) est configurée pour dissiper la chaleur générée par compression par le compresseur (104).

13. Procédé selon la revendication 7, le procédé comprenant le réglage d'un rapport d'engrenage de l'engrenage (112) en fonction des types de fluides entrant dans les premier et deuxième canaux (101, 102).

14. Procédé selon la revendication 9, le procédé comprenant l'introduction de trois types de fluides différents dans les premier, deuxième et troisième canaux (101, 102) respectivement, et le mélange des trois types de fluides différents à l'aide du mélangeur (100).
